Europäisches Patentamt

European Patent Office

Office européen des brevets

(11) Publication number: 0 390 979
A1

## EUROPEAN PATENT APPLICATION

(21) Application number: 89200870.7

(51) Int. Cl.5: **B65G 35/06, A22C 21/00**

(22) Date of filing: 07.04.89

The title of the invention has been amended (Guidelines for Examination in the EPO, A-III, 7.3).

(43) Date of publication of application:
**10.10.90 Bulletin 90/41**

(84) Designated Contracting States:
**AT BE CH DE ES FR GB GR IT LI LU NL SE**

(71) Applicant: LINCO HOLLAND ENGINEERING B.V.
Broekhuizerweg 6
NL-6983 BM Doesburg(NL)

(72) Inventor: **Tieleman, Rudolf Josephus**
c/o Linco Holland Engineering B.V.
Broekhuizerweg 6 NL-6983 BM Doesburg(NL)
Inventor: **Winkelmolen, Antoine Jean Herman**
c/o Linco Holland Engineering B.V.
Broekhuizerweg 6 NL-6983 BM Doesburg(NL)

(74) Representative: **Kooy, Leendert Willem et al**
**OCTROOIBUREAU VRIESENDORP & GAADE**
P.O. Box 266
NL-2501 AW The Hague(NL)

(54) **Method and device for transporting objects around a closed track.**

(57) Process and device for transporting objects whereby the objects are transported along a closed rectangular transport track (B-A-D-C). The said transport track consists along two parallel sides (B-A, D-C) of a continuously movable transporting device (10, 11; 33, 34) and along the other two parallel sides (A-D, C-B) of an intermittently working transporting device (20, 21; 26, 27). The continuously movable transporting device is a sprocket chain (10; 33) provided with carriers (11; 34) for the objects, and the intermittently working transporting device is a continuously driven cylindrical drum (20; 26) which at its outer surface is provided with a cam track (21). The objects to be transported may be mounting units for slaughtered poultry.

FIG. 1

EP 0 390 979 A1

## Process and device for transporting objects.

The present invention relates to a process for transporting objects along a closed track.

When objects have to be transported along a closed track, one has chosen up till now a circular transport track, because constructively they can be carried out relatively simple and because the normal known transporting means, like a transporting wheel or an endless chain conveyor, can be applied for said construction. A disadvantage of these known circular transport tracks is that the objects to be transported move along a curved track, which may present difficulties when certain workings have to be performed on the objects, wherein the objects must move along a straight line.

The alternative is to transport the objects along a long straight track, but then relatively long transporters are necessary which need a lot of space lengthwise.

Another objection of the circular transport tracks is that they also take relatively much space.

The invention has the object to remove the objections of the known transporting method.

This object is attained according to the invention by transporting the objects along a rectangular track.

By applying the process according to the invention the objects are transported along straight tracks, while the necessary space is considerably less in comparison with a circular transport track.

In a preferred embodiment of the process according to the invention the objects are continuously transported along two parallel sides of the rectangle and are stepwise transported along the other two parallel sides.

Therewith one can carry out treatments and/or workings on the objects along the one pair of rectangular sides, which require a continuous straight-line movement of the objects and along the other pair of rectangular sides treatments and/or workings, wherein the objects have to stand still during at least a short period.

The invention also relates to a device for transporting objects along a closed track.

The known transporting devices with a closed track comprise a circular track, because constructively it is the most simple one, e.g. consists of a horizontally disposed wheel, or a chain transporter guided along a circular track. Such a transporting device is unsuitable when movement of the objects along a straight line is required for the workings and besides it takes a lot of space.

The device according to the invention distinguishes itself from the known transporting devices, in that the transport track is a rectangular track.

With the transporting device according to the invention the objects move along a straight track and besides, it takes relatively little space.

With a preferred embodiment of the device according to the invention the transport track along two parallel sides of the rectangle consists of a continuously movable transporting device along a closed track and along the other two parallel sides of an intermittently workings transporting device.

When applying these measures continuous transport and intermittent or stepwise transport are integrated in one and the same device.

With this embodiment of the device according to the invention both workings and/or treatments of non-moving objects and workings and/or treatments of objects moving along a straight line, are possible.

According to the invention the transported object is a mounting unit for slaughtered poultry, which consists of a mandrel, the shape of which is adapted to that of the hollow interior of the body of the birds and which at the one side is provided with a centering rib, which is provided with a groove, in which the backbone of the birds can be received and a projection on either side of the groove, which projections can engage into the kidney spaces of the birds.

By applying these measures it is attained that the slaughtered poultry is accurately centered with the longitudinal center plane parallel to the transporting device. Due to the projections at the centering rib, the kidney spaces of the mounted bird are always at the same height, so that the orientation of the birds with respect to the treatment and/or working elements is always constant and optimal.

Therewith according to the invention the mandrel is provided with a barb-shaped awl at the other side.

Because of the awl the birds can also be perfectly fixed on the mandrel in axial direction.

According to the invention the mounting unit is further pivotably mounted on a base in a vertical plane parallel to the transporting direction and is lockable in different positions, a plurality of mounting apparatus formed by a mounting unit and a base, each being transportable through the device on a mounting plate.

Thereby it is attained that the mandrel and as a consequence thereof also the slaughtered poultry, is adjustable in every possible position in the vertical plane, which is parallel to the transporting direction.

The invention will be further elucidated with an example on the basis of the drawing.

Figure 1 is a perspective top view of the transporting device according to the invention,

figure 2 is a perspective view of the lower corner A of the device according to figure 1,

figure 3 is a perspective view of a mounting unit having a transporting plate, in the vertical position of the mandrel,

figure 4 corresponds with figure 3, the mandrel being tilted forwardly,

figure 5 corresponds with figure 3, the mandrel being tilted backwardly and

figure 6 is a front view of an operating cam of the indexing mechanism of the mounting units.

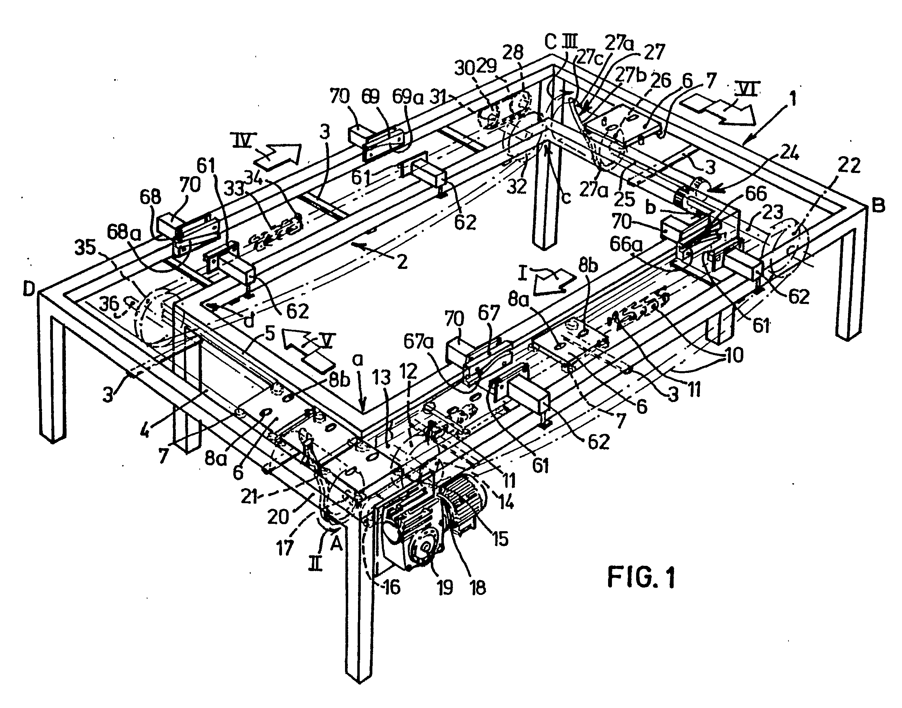

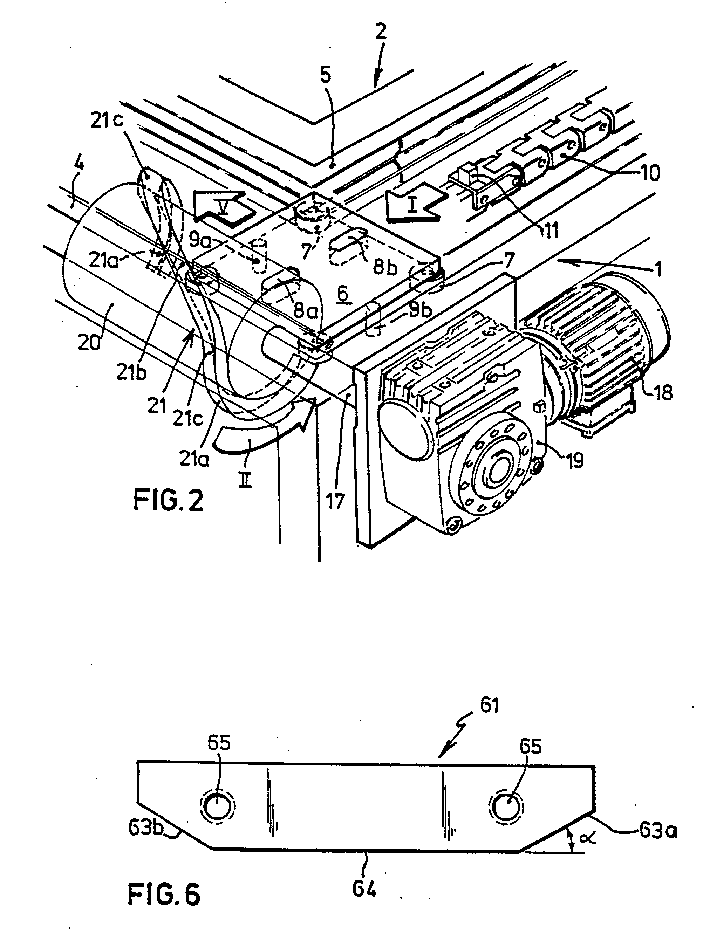

The transporting device according to the figures 1 and 2 is provided with a table-shaped, rectangular outer frame 1 and with a likewise table-shaped, rectangular inner frame 2, which frames have the same height, ly with their upper faces in one flat plane and are equally spaced from each other along the whole circumference. The frames 1 and 2 are connected with each other by spaced cross connections 3 along the circumference, so that the frames 1 and 2 form a rigid entity. The frames 1 and 2 may e.g. consist of square metal tubes welded to each other.

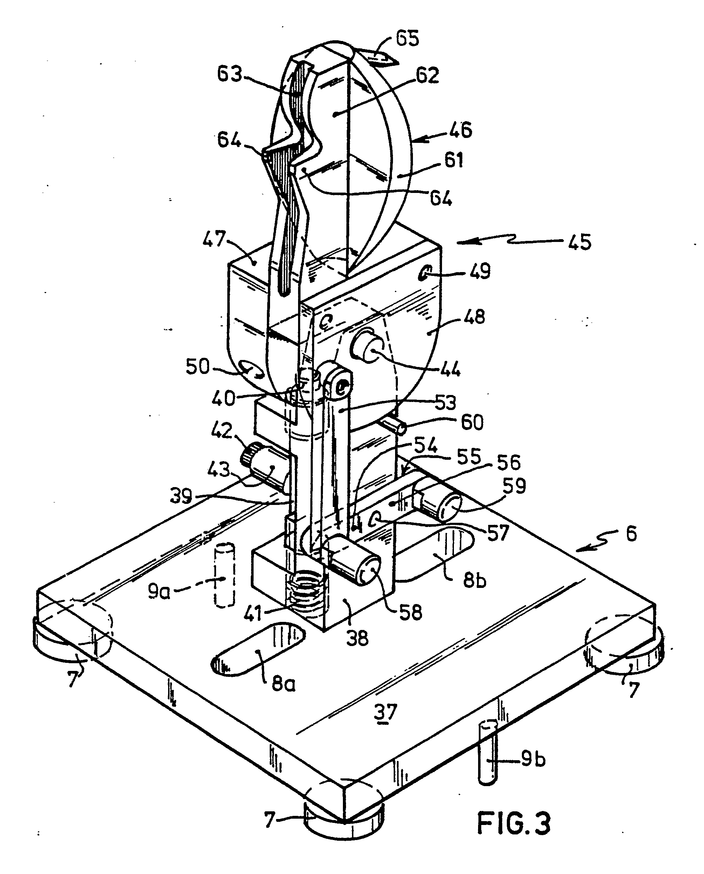

The outer frame 1 is at the inside and the inner frame 2 is at the outside of their rectangular "table top" provided with rails 4 and 5 respectively, between which rails 4 and 5 rectangular carriages 6 are displaceable, which run in the rails 4 and 5 with rollers or wheels 7 applied at the corner points of the carriages 6. The carriages 6 form mounting plates for mounting units to be described later, vide the figures 3, 4 and 5. The carriages 6 are provided with recesses 8a and 8b and carrier pins 9a and 9b which are applied at the bottom plane, the function and operation of which will be described later on.

The outer frame 1 of the transporting device has four corner points A, B, C and D. Along the side A-B of the frame 1 a driving chain 10 with carriers 11 is disposed, which engage into the front recesses 8a in the direction of movement. The carriages 6 are transported by the chain 10 and the carriers 11 in such a way, that the carriages 6 with an interspace, which is approximately equal to 2,3 times the length of the carriage in transporting direction, are carried the chain 10. The chain 10 adjacent to the corner point A runs over a chain wheel 12, which is secured to an intermediate axle 13, to which a second chain wheel 14 is secured. Over the second chain wheel 14 runs a chain 15, which also runs over a chain wheel 16 on an axle 17, which is journalled parallel to the side A-D of the frame 1.

The chain 10 at some distance from the chain wheel 12 runs over a guide (not drawn) adjustable in longitudinal direction of the chain 10, which guide lies higher than the horizontal line through the highest point of the chain wheel 12 and with which the point can be set, where the carriers 11 leave the front recesses 8a in the carriages 6 and consequently do not carry them any further.

At the side A-B of the frame 1 an electric motor 18 and a reducing gear box 19 are mounted at the outside, which gear box 19 is coupled with the axle 17 and drives it continuously. Through the axle 17, the chain wheel 16, the chain 15, the chain wheel 14, the intermediate axle 13 and the chain wheel 12, the chain 10 with the carriers 11, and consequently the carriages 6, are continously driven in the direction of the arrow I. On the axle 17 a driving drum 20 is secured, which is provided with a driving rib 21, which consists on either end of a portion 21a without a pitch, and of a portion 21b with a relatively large pitch therebetween, which is connected to the portions 21a with a gradually changing transition portion 21c. The curve, which is formed by a transition portion 21c, the portion 21b and another transition portion 21c, runs along a so-called oblique sine curve, that means a sine curve, on which a straight line is superponed. The axle 17 drives the drum 20 in the direction of the arrow II.

The chain 10 adjacent to the corner point B of the frame 1 runs over a chain wheel 22, which is secured on an axle 23, which is journalled parallelly to the side B-C of the frame 1. The axle 23 is at the end opposite the chain wheel 22 connected with a reversing device 24, which has a driven axle 25 at the other side, which is driven in opposite direction to that of the axle 23. On the driven axle 25 a driving drum 26 with a driving rib 27 is secured parallelly to the side B-C of the frame 1, the construction and shape of said driving drum correspond with that of the driving drum 20 with the driving rib 21 in the corner A of the frame 1 and which rotates in the direction of the arrow III. Further on the driven axle 25 at the side of the drum 26 adjacent to the corner C of the frame 1, a chain wheel 28 is secured, over which a chain 29 is running, which runs over a chain wheel 30, which is secured on an intermediate axle 31 being journalled on the frames 1 and 2. At the other side on the intermediate axle 31 a chain wheel 32 is secured, over which a driving chain 33 is running, which is provided with carriers 34 and which at the other end adjacent to the corner D of the frame 1 runs over a chain wheel 35, which is freely rotatably journalled on an axle 36, which is supported on the frames 1 and 2. The driving chain 33 runs parallelly to the side C-D of the frame 1 and moves with the upper part in the direction of the arrow IV.

Also the chain 33 runs at some distance of the chain wheel 32 over a guide (not drawn) adjustable in longitudinal direction of the chain 33, said guide lying higher than the horizontal line, which connects the highest points of the chain wheels 32 and 35 with each other and with which the point can be set, where the carriers 34 leave the recesses 8b then in front of the carriages 6 and consequently do not carry them any further.

The operation of the above described transporting device, starting from the corner point B of the frame 1, is as follows:

The carriage 6, which is in the point B of the frame 1, is carried by a carrier 11 of the chain 10, which engages into the recess 8a in the carriage 6, in the direction of the arrow I along the side B-A of the frame 1. The first carriage 6 is carried by the carrier 11 untill a certain distance from the corner A, after which the carrier 11 moves out of the recess 8a. The first carriage 6 then remains on that point, until it is moved by the carriages 6 following thereon as far as possible in the direction of the arrow I. After the mentioned first carriage 6 has stopped in the corner A, the driving rib 21 on the driving drum 20 engages into the front carrier pin 9a in the direction of movement at the bottom side of the carriage 6 and the carriage 6 is transported over a distance, which is approximately equal to the length of the carriage 6 parallel to the side A-D in the direction of the arrow V in figure 2. The next carriage 6 and the following carriages, which is/are brought in the corner A of the frame 1 by the chain 10 and the carriers 11, is/are transported afterwards also over the same distance as the above mentioned carriage 6 by the drum 20 and the rib 21, so that all carriages 6 on the path A-D are transported over this distance in the direction from A to D.

When the above mentioned first carriage 6 has arrived in the corner point D of the frame 1, it is shortly afterwards carried by a carrier 34 of the driving chain 33 and transported into the direction of the arrow IV (figure 1) to the corner point C of the frame 1. Therewith the carrier 34 then engages into the front recess 8b in the direction of movement IV. The carriages 6 are transported over the path from D to C in the direction of movement IV with the same mutual distance as over the path from B to A, viz. approximately 2,3 times the length of the carriages in the direction of movement IV.

Also on the path from D to C the carriages 6 will stop at a certain distance from the corner point C of the frame 1, because the carrier 34 of the driving chain 33 moves out of the front recess 8b of the carriages 6. Subsequently, the carriages 6 are displaced one by one as far as possible in the direction of the arrow IV by the following carriages, until they are in the corner C of the frame 1.

Shortly after the above mentioned first carriage 6 has arrived in the corner point C, the driving rib 27 on the driving drum 26 engages into the front carrier pin 9b in the direction of movement VI and the carriage 6 is transported over a distance, equal to the length of the carriage in the direction of movement VI, to the corner point B of the frame 1, wherein all carriages present on the path from C to B are displaced over the same distance to the corner point B. In this way the above mentioned first carriage 6 returns at its starting point in the corner B of the frame 1 and the cycle starts again.

From the above it follows that on the paths from B to A and from D to C according to the arrows I and IV continuous transport of the carriages 6 takes place and on the paths from A to D and from C to B stepwise transport or intermittent transport takes place.

The carriage 6, which is drawn in the figures 3, 4 and 5 has a transporting plate 37, in which the above mentioned recesses 8a and 8b are applied, and which at the bottom side are provided with the carrier pins 9a and 9b and on which the rollers or wheels 7 are mounted at the four corner points. On the plate 37 a base 38 is secured, in which an indexing pin 39 with a smaller top end 40 is mounted, in the bore for the indexing pen 39 a pressure spring 41 is applied below the pin, which biasses the pin 39 constantly upwardly. On the indexing pin 39 an operating pin 42 is secured extending laterally thereof and on which a free rotatable roller 43 is mounted.

On the base 38 a mounting unit 45 is mounted pivotably about an axle 44, said unit consists of a mandrel 46, an indexing plate 47 and an operating plate 48, the mandrel 46 being clamped between the indexing plate 47 and the operating plate 48 by means of bolts 49. The indexing plate 47 is provided with three indexing bores 50, 51 and 52, the angular distance between the bores 50 and 51 and between the bores 51 and 52 being ± 75°.

In the positions of the mounting unit 45 according to the figures 3, 4 and 5 the upper end 40 of the indexing pin 39 engages into the indexing bores 51, 52 and 50 respectively, the mounting unit 45 successively standing substantially vertical, and being tilted forwardly and backwardly respectively, over an angle of ± 75°.

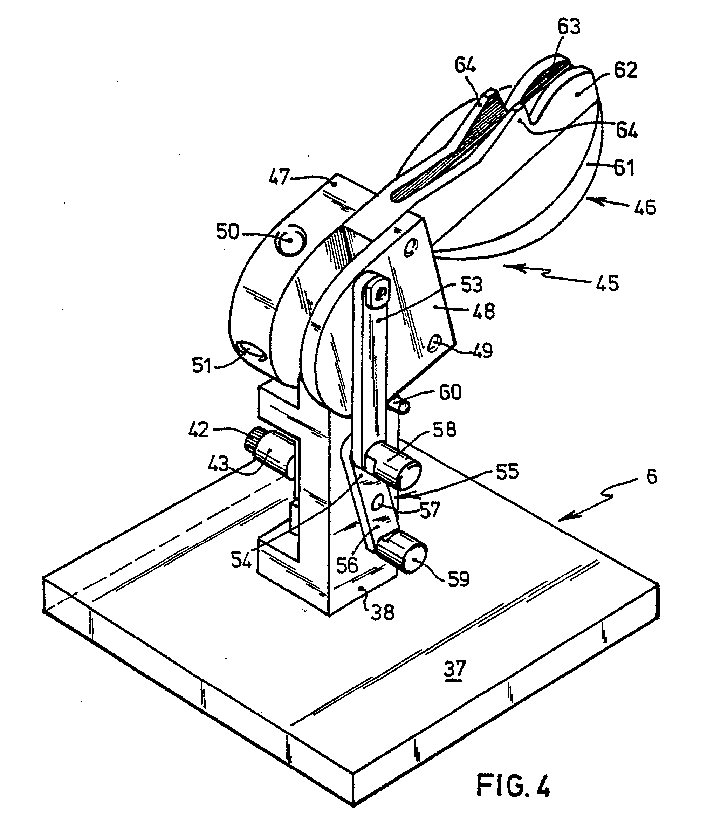

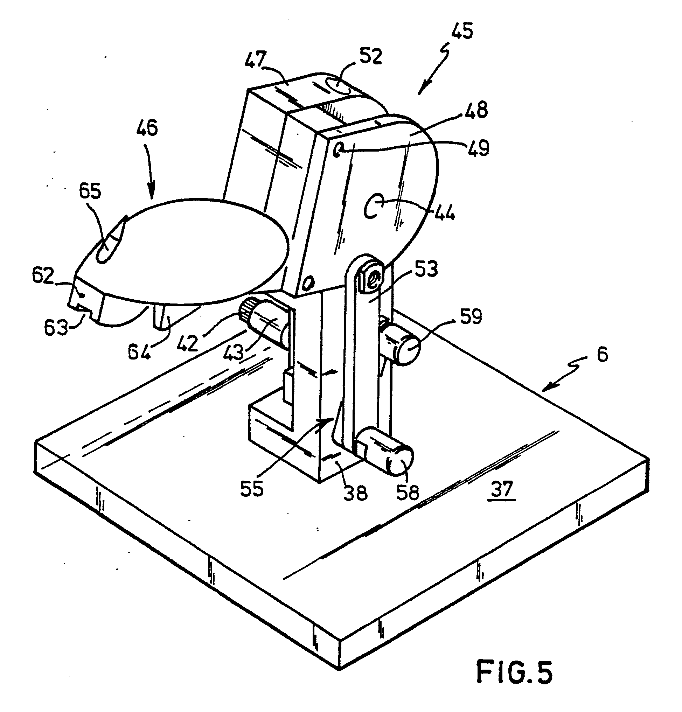

On the operating plate 48 a rod 53 is pivotally mounted, which is pivotally connected with the one arm 54 of a two-armed lever 55, the other arm of which is indicated with 56 and which on a journal 57 is pivotally mounted on the base 38. The arms 54 and 56 of the lever 55 are at their ends provided with free rotatable pins or rollers 58 and 59, respectively. Moreover the free end face of the pin or roller 58 lies at a greater distance from the lever 55 than that of the pin or roller 59, the function of which will be further elucidated hereafter. On the base 38 still a stop pin 60 is applied which serves as a stop for the rod 53, both in the forwardly tilted position (figure 4) and in the backwardly tilted position (figure 5) of the mounting unit 45 to prevent the unit 45 from revolving too far.

The mandrel 46 consists of a body 61, the outer form of which is adapted to the shape of the hollow interior of the body of slaughtered poultry and that at the one side, the backside, is provided with a centering rib 62, in which a groove 63 is applied which can receive the backbone of the birds.

According to the invention the centering rib 62 is on either side provided with a projection 64, which projections 64 engage into the kidney spaces of the birds, which are placed on the mandrel 46, the backbone of the birds protruding into the groove 63. Because of the projections 64, which protrude in the kidney spaces and the groove 63 receiving the backbone, the birds are fixed and centered respectively, in three directions, so that the birds take an optimal position for the treatments and workings to be done.

To hold the birds on the mandrel 46 in axial direction, at the front side of the shaped body 46 adjacent to the free end a barb-shaped awl 65 is applied, which prevents sliding off the birds from the mandrel 46, because of the fact that it is directed obliquely backwardly in the direction from the free end.

At the side B-A of the outer frame 1 and on the side d-c of the inner frame 2, each time two operating cams 61 are mounted for the indexing mechanism 39-43 of the mounting unit 45, which cams are secured to the frame beams B-A and d-c with holders 62.

The operating cams 61 are provided with rising planes 63a and 63b under an angle of ± 30 with respect to the horizontal, with a horizontal operating plane 64 and with bores 65 with screwthread for fixation to the holders 62. The operating cams 61 may be manufactured of metal, synthetic material or other wear-resistant material.

Right opposite the operating cams 61 at the side b-a of the inner frame 2 and the side D-C of the outer frame 1, each time two adjusting cams 66 up to and including 69 are mounted, which are secured to the frame girders also by means of holders 70. The adjusting cams 66, 67 and 68 consist of a block of metal, synthetic material or other wear-resistant material, in which a groove-shaped cam track 66a, 67a and 68 respectively is milled. The cam 69 also consists of a block of metal, synthetic material or similar material, which has a thickened part having a cam track 69a at the bottom side.

The function and the workings of the operating cams 61 of the adjusting cams 66 up to and including 69 and of the mounting units 45 will now be further elucidated.

At the beginning of the path from B to A in the direction of the arrow I the mounting units 45 are substantially vertical and the indexing pin 39 engages with the smaller top end 40 into the indexing bore 51. When approaching the adjusting cam 66, firstly the pin 58 moves into the curve track and then the roller 43 runs on the front rising plane 63a of the operating cam 61 and subsequently on the operating plane 64, so that the indexing pin 39,40 releases the index plate 47 and consequently the mounting unit 45. Then the pin 58 is pushed upwardly by the movement in the cam track 66a, so that the mounting unit 45 tilts forwardly from the vertical position over an angle of ± 75 into the position according to figure 4, after which the roller 43 runs from the operating cam track via the back rising plane 63b and the indexing pin 39, 40 engages into the bore 52, thereby blocking the mounting unit 45 again. Between the adjusting cams 66 and 67 in the direction of the arrow I the birds are turned with their backs upwardly and the desired treatments and/or workings may be done e.g. at that side.

When approaching the adjusting cam 67 again the pin 58 moves firstly into the cam track 67a, after which the operating cam 61 releases the adjusting unit 45 in the above described manner and the cam track 67a pushes the pin 58 gradually downwardly, so that the mounting unit 45 pivots into the vertical position according to figure 3, after which the operating cam 61 releases the indexing pin 39, 40, which engages into the bore 51, so that the mounting unit 45 is fixed again.

During transport of the carriages 6 over the remaining part of the path from B to A in the direction of the arrow I, over the path from A to D in the direction of the arrow V and over the first part of the path from D to C in the direction of the arrow IV the mounting unit 45 remains substantially vertical according to figure 3.

When approaching the adjusting cam 68 in the direction of the arrow IV firstly the pin 58 moves again into the curve track 68a and subsequently the index pin 39, 40 is pulled back by the operating cam 61 and the mounting unit 45 is released. The cam track 68a pushes the pin 58 downwardly, by which the mounting unit 45 pivots from the vertical position according to figure 3 over ± 75° into the backwardly tilted position according to figure 5 and the index pen 39, 40 is released by the operating cam 61 and engages into the bore 50, so that the mounting unit 45 is blocked in the position according to figure 5.

Between the adjusting cams 68 and 69 in the direction of the arrow IV the birds lie with their breast upwardly and in this position the required treatments of and workings on the birds can be done.

During the movement of the mounting unit 45 towards the adjusting cam 69 in the direction of the arrow IV, the mounting unit 45 is tilted backwardly, vide figure 5, and the pin 58 of the operating mechanism 53-59 is in the lowest position, so that it moves under the adjusting cam 69. The pin 59 is in the highest position, runs on the cam track 69a and then the indexing pin 39, 40 is pushed out of the indexing bore 50 in the indexing plate 47 by the operating cam 61 in the above described manner and thereby the mounting unit 45 is released. The pin 59 runs further on the cam track 69a and is thereby pushed downwardly so far, that the mounting unit 45 from the position according to figure 5 is tilted over an angle of ± 75° into the vertical position according to figure 3, after which the operating cam 61 again releases the indexing pen 39, 40 and the latter moves them into the indexing bore 51.

During the movement of the mounting unit 45 with the mounting plate 6 over the remaining part of the path from D to C in the direction of the arrow IV and over the path from C to B in the direction of the arrow VI, the mounting unit 45 remains substantially in the vertical position according to figure 3 and is then returned again on the starting point in the corner B of the frame 1.

## Claims

1. A process for transporting objects along a closed track, **characterized in that** the objects (6, 45) are transported along a rectangular track (B-A-D-C).

2. A process according to claim 1, **characterized in that** the objects are continuously transported along two parallel sides (B-A, D-C) of the rectangle and are transported step by step along the other two parallel sides (A-D, CB).

3. A device for transporting objects along a closed track, **characterized in that** the transport track is a rectangular track (B-A-D-C).

4. A device according to claim 3, **characterized in that** the transport track (B-A-D-C) along two parallel sides (B-A, D-C) of the rectangle consists of a transporting device (10, 11; 33, 34) that is continuously movable along a closed track and along the other two parallel sides (A-D, C-B) of an intermittently working transporting device (20, 21; 26, 27).

5. A device according to claim 4, **characterized in that** the continuously movable transporting device is a sprocket chain (10; 33) provided with carriers (11; 34) for the objects (6, 45), which carriers engage into recesses (8a, 8b) in the objects and that the intermittently working transporting device is a continuously driven cylindrical drum (20; 26), which at its outer surface is provided with a cam track (21; 27) which can be periodically engaged with a projection (9a, 9b) applied at the objects (6).

6. A device according to claim 5, **characterized in that** said cam track is a driving rib (21; 27) at the outer surface of the drum (20; 26).

7. A device according to claim 6, **characterized in that** the driving rib (21; 27) comprises a portion (21a; 27a) without a pitch at both ends and a portion (21b; 27b) having a relatively large pitch therebetween, which is connected to to the portions without a pitch with a transition portion (21c; 27c).

8. A device according to one of the claims 3 up to and including 7, **characterized in that** the object to be transported is a mounting unit (45) for slaughtered poultry, which consists of a mandrel (46) the shape of which is adapted to that of the hollow interior of the body of the bird and which at the one side is provided with a centering rib (62), which is provided with a groove (63) in which the backbone of the bird can be received and with a projection (63) on either side of the groove, which projection can engage into the kidney spaces of the birds.

9. A device according to claim 8, **characterized in that** the mandrel (46) at the other side is provided with a barb-shaped awl (65).

10. A device according to claim 8, **characterized in that** the mounting unit (45) is pivotably mounted on a base (38) in a vertical plane parallel to the transporting direction and is lockable in different positions, a plurality of mounting apparatus, formed by a mounting unit (45) and a base (38), each being transportable through the device on a mounting plate (6).

11. A device according to claim 9 or 10, **characterized in that** each mounting apparatus (6, 38, 45) is provided with an indexing mechanism (39-52) having a spring-loaded indexing pin (39, 40) which may engage in one of a plurality of indexing bores (50, 51, 52) in an indexing plate (47) secured to the mandrel (46) and which is provided with an operating pin (42, 43) which can cooperate with operating cams (61) on the frame (1, 2) and that each mounting apparatus (6, 38, 45) is provided with an adjusting mechanism (53-59) having a two-armed lever (55), which is mounted pivotably on the base (38), the one arm (54) of which is pivotably connected with the mounting unit (45) by means of a rod (53) and both arms (54, 56) of which are provided with a pin (58, 59) at their ends, which pin can cooperate with adjusting cams (66-69) on the frame (1, 2) of the transporting device.

12. A device according to claim 11, **characterized in that** each mounting plate is a flat rectangular plate (37), which is provided with at least one recess (8a, 8b) in which a carrier (11; 34) on the sprocket chain (10; 33) can engage, with at least one carrier pin (9a, 9b) which can cooperate with a driving rib (21; 27) on the transport drum (20; 26) forming a cam track and with a guide roller (7) on every corner of the plate (37), which rollers run in rails (4; 5) on the frame (1; 2) of the transporting device.

FIG. 1

FIG.2

FIG.6

FIG.3

FIG. 4

FIG.5

European Patent
Office

**EUROPEAN SEARCH REPORT**

Application number

EP 89 20 0870

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | GB-A-1 272 263 (FOUNDRY MANAGEMENT & DESIGN CO. LTD) <br><br> * Figure 1 * | <br><br> 1,3 | B 65 G 35/06 <br> A 22 C 21/00 |
| Y | | 2-4,8, 10,11 | |
| Y | CH-A- 410 782 (A. EGLI) <br><br> * Figure 1; page 1, lines 57-71 * | <br><br> 2,4 | |
| X | DE-C-3 733 585 (A. ZIMMER) <br><br> * Column 2, lines 23-55; figure 1 * | <br><br> 1,3 | |
| A | GB-A-2 132 154 (SOCIETE D'EXPLOI-TATION DES MACHINES DUBUIT) <br><br> * Figure 11; page 4, lines 60-120 * | <br><br><br> 5,12 | TECHNICAL FIELDS SEARCHED (Int Cl 4) <br><br> B 65 G |
| A | DE-A-2 048 246 (TOSHIBA SEIKI K.K.) <br><br> * Figures 4,5; page 3, lines 16-30 * | <br><br> 5 | |
| A | DE-A-3 431 349 (ROBERT BOSCH GmbH) <br><br> * Figure 2; page 7, lines 9-27 * <br><br> -- ./. | <br><br> 5 | |

The present search report has been drawn up for all claims

| Place of search | Date of completion of the search | Examiner |
|---|---|---|
| The Hague | 04-04-1990 | NEVILLE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on. or after the filing date
D : document cited in the application
L : document cited for other reasons

& : member of the same patent family. corresponding document

EPO Form 1503 03 82

## DOCUMENTS CONSIDERED TO BE RELEVANT

| Category | Citation of document with indication, where appropriate, of relevant passages | Relevant to claim | CLASSIFICATION OF THE APPLICATION (Int. Cl.) |
|---|---|---|---|
| Y | US-A-4 780 930 (SPARKIA) | | |
| | * Whole document * | 3,8, 10,11 | |
| A | | 9,12 | |
| | -- | | |
| A | US-A-4 602 403 (MARTIN) | | |
| | * Column 3, lines 3-44; figure 2 * | 8,10, 12 | |
| | -- | | |
| A | EP-A-0 254 332 (STORK) | | |
| | * Column 3, line 51 - column 4, line 18; figures 4,7 * | 9-11 | |

TECHNICAL FIELDS
SEARCHED (Int. Cl.)

The present search report has been drawn up for all claims

| Place of search | Date of completion of the search | Examiner |
|---|---|---|
| | . | |

European Patent
Office

| | CLAIMS INCURRING FEES |
|---|---|

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid.

namely claims:

☐ No claims fees have been paid within the prescribed time limit. The present European search report has been drawn up for the first ten claims.

| X | LACK OF UNITY OF INVENTION |
|---|---|

The Search Division considers that the present European patent application does not comply with the requirement of unity of invention and relates to several inventions or groups of inventions.

namely:

1. Claims 1,2,3-7: Transporting objects along a rectangular track with a continuously moveable transporting device along two parallel sides and an intermittantly working device along other two parallel sides
2. Claims 3,8-11,12: Mounting units for slaughtered poultry transported along a rectangular track

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid.

namely claims:

☐ None of the further search fees has been paid within the fixed time limit. The present European search report has been drawn up for those parts of the European patent application which relate to the invention first mentioned in the claims.

namely claims: